# EUROPEAN PATENT APPLICATION

(11) **EP 3 641 038 A1**
(43) Date of publication of application: **22.04.2020**
(21) Application number: 18818627.4
(22) Date of filing: 17.05.2018
(51) Int. Cl.: H01M 8/1213, C01B 3/56, C04B 35/488, C04B 35/50, C25B 1/10, C25B 9/10, C25B 11/06, C25B 13/04, H01B 1/06, H01B 1/08, H01M 4/86, H01M 8/12, H01M 8/1253, H01M 8/126

(54) **SOLID ELECTROLYTE MEMBER, SOLID OXIDE FUEL CELL, WATER ELECTROLYSIS DEVICE, HYDROGEN PUMP, AND METHOD FOR PRODUCING SOLID ELECTROLYTE MEMBER**

(30) Priority: 15.06.2017 JP 2017117853
(71) Applicant: Sumitomo Electric Industries, Ltd., Osaka-shi, Osaka 541-0041 (JP)
(72) Inventor: HIRAIWA Chihiro, Itami-shi Hyogo 664-0016 (JP); KANDA Ryoko, Itami-shi Hyogo 664-0016 (JP); HIGASHINO Takahiro, Itami-shi Hyogo 664-0016 (JP); MAJIMA Masatoshi, Itami-shi Hyogo 664-0016 (JP)
(74) Representative: Boult Wade Tennant LLP
(86) International application number: PCT/JP2018/019089
(87) International publication number: WO 2018/230247

(57) **Abstract**

Provided is a proton-conductive solid electrolyte member having a structure in which an electrolyte layer and an anode layer are laminated. The electrolyte layer contains a metal oxide having a perovskite crystal structure. The anode layer contains Fe₂O₃ and the metal oxide. The metal oxide is a metal oxide expressed by the following formula [1], or a mixture or a solid solution of a metal oxide expressed by the following formula [1]: AₐB_{b}M_{c}O_{3-δ}, where A denotes at least one element selected from the group consisting of Ba and Ca; B denotes at least one element selected from the group consisting of Ce and Zr; M denotes at least one element selected from the group consisting of Y, Yb, Er, Ho, Tm, Gd, In, and Sc; a is a number satisfying 0.85 ≤ a ≤ 1; b is a number satisfying 0.50 ≤ b < 1; c is a number satisfying c = 1 - b; and δ is an oxygen deficiency amount.

## Description

### TECHNICAL FIELD

The present invention relates to a solid electrolyte member, a solid oxide fuel cell, a water electrolysis device, a hydrogen pump, and a method for manufacturing a solid electrolyte member.

The present application claims a priority based on Japanese Patent Application No. 2017-117853 filed on June 15, 2017, the entire contents of which are incorporated herein by reference.

### BACKGROUND ART

The development of solid oxide fuel cells (hereinafter also referred to as "SOFCs") has been promoted because they have the advantages of being efficient in power generation, not requiring expensive catalysts, such as platinum, and being able to use exhaust heat.

A fuel cell includes, in its basic part, a membrane electrode assembly (MEA) or membrane electrode composite constituted of a fuel electrode (anode), a solid oxide electrolyte, and an air electrode (cathode). The fuel cell further includes a fuel electrode current collector in contact with the fuel electrode of the MEA, and a fuel electrode flow path for supplying a fuel gas (e.g., hydrogen) to the fuel electrode. Also, on the air electrode side paired with the fuel electrode, the fuel cell includes an air electrode current collector in contact with the air electrode, and an air flow path for supplying air to the air electrode.

Among materials exhibiting high proton conductivity, barium zirconate doped with a trivalent element is relatively stable against CO₂ and H₂O, and is thus expected as solid electrolytes for fuel cells for use at intermediate range temperatures. Barium serrate doped with a trivalent element is also known as a material exhibiting higher proton conductivity.

For example, Japanese Patent Laying-Open No. 2001-307546 (PTL 1) describes a perovskite oxide for use as an ion conductor for a fuel cell, the perovskite oxide being expressed by the formula: BaZr_{1-x-y}CeₓM_{y}O₃₋ₚ, where M is a trivalent substituted element, each of x and y is a numerical value of more than 0 and less than 1, x + y is less than 1, p is a numerical value of more than 0 and less than 1.5.

Japanese Patent Laying-Open No. 2007-197315 (PTL 2) describes a mixed ion conductor for use in a fuel cell, the mixed ion conductor being composed of a perovskite oxide expressed by the formula: Ba_{d}Zr_{1-x-y}CeₓM³_{y}O₃₋ₜ, where M³ is at least one element selected from a trivalent rare-earth element, Bi, Ga, Sn, Sb, and In; d is not less than 0.98 and not more than 1; x is not less than 0.01 and not more than 0.5; y is not less than 0.01 and not more than 0.3; and t is not less than (2 + y - 2d)/2 and less than 1.5.

Japanese Patent Laying-Open No. 2012-104308 (PTL 3) describes a method for manufacturing a solid oxide fuel cell component, in which a solid solution of yttria (Y₂O₃) in BaZrO₃ is used as an electrolyte, the solid solution being expressed by the composition formula: BaZrₓY₁₋ₓO_{3-δ}, where 0.1 < x < 0.99 and 0.01 < δ < 0.5 are satisfied.

### CITATION LIST

### PATENT LITERATURE

PTL 1: Japanese Patent Laying-Open No. 2001-307546
PTL 2: Japanese Patent Laying-Open No. 2007-197315
PTL 3: Japanese Patent Laying-Open No. 2012-104308

### SUMMARY OF INVENTION

A solid electrolyte member according to one aspect of the present invention is a proton-conductive solid electrolyte member having a structure in which an electrolyte layer and an anode layer are laminated,
the electrolyte layer containing a metal oxide having a perovskite crystal structure,
the anode layer containing Fe₂O₃ and the metal oxide,
the metal oxide being a metal oxide expressed by the following formula [1], or a mixture or a solid solution of a metal oxide expressed by the following formula [1]:

AₐB_{b}M_{c}O_{3-δ} formula [1],

where A denotes at least one element selected from the group consisting of barium (Ba) and calcium (Ca); B denotes at least one element selected from the group consisting of cerium (Ce) and zirconium (Zr); M denotes at least one element selected from the group consisting of yttrium (Y), ytterbium (Yb), erbium (Er), holmium (Ho), thulium (Tm), gadolinium (Gd), indium (In), and scandium (Sc); a is a number satisfying 0.85 ≤ a ≤ 1; b is a number satisfying 0.50 ≤ b < 1; c is a number satisfying c = 1 - b; and δ is an oxygen deficiency amount.

A method for manufacturing a solid electrolyte member according to one aspect of the present invention is a method for manufacturing the above-described solid electrolyte member according to one aspect of the present invention, the method comprising:
molding an anode layer material and pre-sintering the molded anode layer material to form a pre-sintered layer;
applying an electrolyte layer material to one face of the pre-sintered layer and drying the applied electrolyte layer material; and
sintering the pre-sintered layer having the electrolyte layer material applied thereon, thereby forming a solid electrolyte member in which an anode layer and an electrolyte layer are laminated,
the electrolyte layer material containing a metal oxide having a perovskite crystal structure,
the anode layer material containing Fe₂O₃ and the metal oxide,
the metal oxide being a metal oxide expressed by the following formula [1], or a mixture or a solid solution of a metal oxide expressed by the following formula [1]:

   AₐB_{b}M_{c}O_{3-δ} formula [1],

   where A denotes at least one element selected from the group consisting of barium (Ba) and calcium (Ca); B denotes at least one element selected from the group consisting of cerium (Ce) and zirconium (Zr); M denotes at least one element selected from the group consisting of yttrium (Y), ytterbium (Yb), erbium (Er), holmium (Ho), thulium (Tm), gadolinium (Gd), indium (In), and scandium (Sc); a is a number satisfying 0.85 ≤ a ≤ 1; b is a number satisfying 0.50 ≤ b < 1; c is a number satisfying c = 1 - b; and δ is an oxygen deficiency amount.

### BRIEF DESCRIPTION OF DRAWINGS

Fig. 1 is a schematic diagram showing an example construction of a solid electrolyte member according to the first embodiment of the present invention.
Fig. 2 is a schematic diagram showing an example construction of a solid electrolyte member according to the second embodiment of the present invention.
Fig. 3 is a schematic diagram showing an example construction of a solid electrolyte member according to the third embodiment of the present invention.
Fig. 4 is a schematic diagram showing an example construction of a solid electrolyte member according to the fourth embodiment of the present invention.
Fig. 5 is a schematic diagram showing an example construction of a solid electrolyte member according to the fifth embodiment of the present invention.
Fig. 6 is a schematic diagram showing an example construction of a conventional solid electrolyte member.

### DETAILED DESCRIPTION

### [Problem to be Solved by the Present Disclosure]

Among the perovskite oxides described above, barium zirconate doped with yttrium (BZY) and barium serrate doped with yttrium (BCY) exhibit high proton conductivity even in a temperature range of 700°C or lower, and are thus expected as solid electrolyte members for fuel cells for use at intermediate range temperatures. Accordingly, the inventors considered using a perovskite oxide, such as BZY and BCY, to produce a solid electrolyte member having an anode layer, an electrolyte layer, and a cathode layer laminated in this order. Specifically, firstly, an anode layer material was pre-sintered at about 1000°C to form an anode layer (pre-sintered layer). Secondly, an electrolyte layer material was applied to one face of the anode layer (pre-sintered layer) and then co-sintered at about 1450°C. Lastly, a cathode layer material was applied and then sintered at about 1050°C. Thus, a laminated solid electrolyte member was produced. However, the inventors found that, in an attempt to upsize the solid electrolyte member, the cathode layer may peel off at the interface between the electrolyte layer and the cathode layer, or the anode layer and the cathode layer may electrically connect to each other, causing a short circuit.

The inventors made further considerations about these problems and made the following findings.

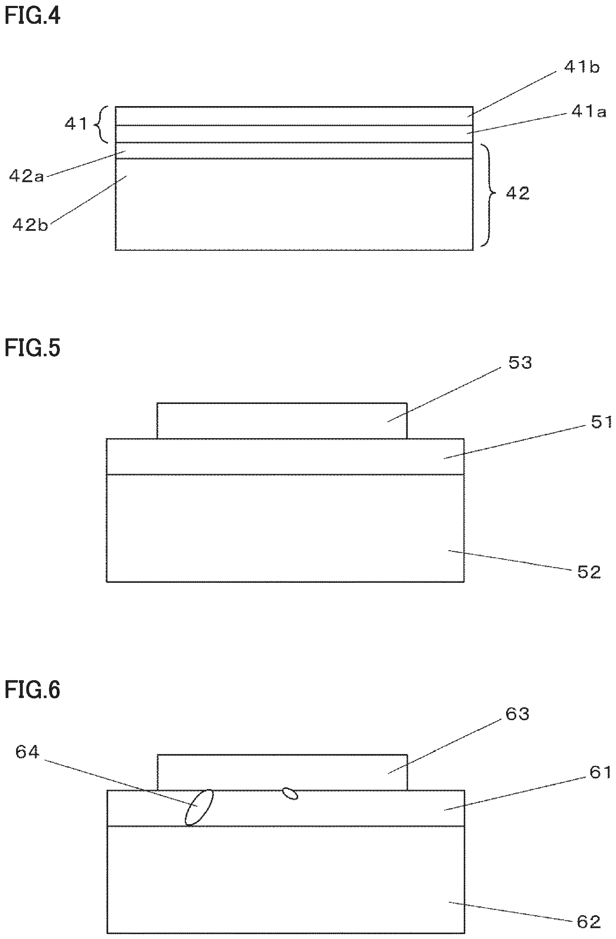

As shown in Fig. 6, when an anode layer 62 and an electrolyte layer 61 were co-sintered, Ba and Ni contained in anode layer 62 reacted with each other at about 1200°C or higher, thus forming liquid-phase BaNiOₓ64. Further, liquid-phase BaNiOₓ64 was soaked up by capillary action to reach the surface of cathode layer 63 on electrolyte layer 61.

Further, by the time of the evaluation of power generation from the solid electrolyte member, BaNiOₓ64 had been decomposed into BaCO₃ and NiO. As a result, BaCO₃ decreased in adhesiveness at the interface between electrolyte layer 61 and cathode layer 63, causing cathode layer 63 to peel off. Also, NiO was reduced into Ni by H₂, causing a short circuit between anode layer 62 and cathode layer 63.

The present invention has been made to solve the above-described problems. An object of the present invention is to provide a solid electrolyte member in which an anode layer and an electrolyte layer are laminated, the solid electrolyte member having a large size and exhibiting high proton conductivity even in a temperature range of about 700°C or lower.

### [Advantageous Effect of the Present Disclosure]

The invention can provide a solid electrolyte member having a large size and exhibiting high proton conductivity even in a temperature range of about 700°C or lower.

### [Description of Embodiments of the Invention]

First, embodiments of the present invention are enumerated.
(1) A solid electrolyte member according to one aspect of the present invention is a proton-conductive solid electrolyte member having a structure in which an electrolyte layer and an anode layer are laminated,
   the electrolyte layer containing a metal oxide having a perovskite crystal structure,
   the anode layer containing Fe₂O₃ and the metal oxide,
   the metal oxide being a metal oxide expressed by the following formula [1], or a mixture or a solid solution of a metal oxide expressed by the following formula [1]:

   AₐB_{b}M_{c}O_{3-δ} formula [1],

   where A denotes at least one element selected from the group consisting of barium (Ba) and calcium (Ca); B denotes at least one element selected from the group consisting of cerium (Ce) and zirconium (Zr); M denotes at least one element selected from the group consisting of yttrium (Y), ytterbium (Yb), erbium (Er), holmium (Ho), thulium (Tm), gadolinium (Gd), indium (In), and scandium (Sc); a is a number satisfying 0.85 ≤ a ≤ 1; b is a number satisfying 0.50 ≤ b < 1; c is a number satisfying c = 1 - b; and δ is an oxygen deficiency amount.
   The aspect of the invention according to the above (1) can provide a solid electrolyte member having a large size and exhibiting high proton conductivity even in a temperature range of about 700°C or lower.
(2) In the solid electrolyte member according to the above (1), the content of the Fe₂O₃ in the anode layer is preferably not less than 30% by mass and not more than 70% by mass.
   The aspect of the invention according to the above (2) can provide a solid electrolyte member including an anode layer having high conductivity and high strength.
(3) In the solid electrolyte member according to the above (1) or (2), the difference in thermal expansion coefficient between the electrolyte layer and the anode layer is preferably not more than 2.5 × 10⁻⁶ K⁻¹.
   The aspect of the invention according to the above (3) can provide a solid electrolyte member having a small difference in thermal expansion coefficient between the electrolyte layer and the anode layer, thus having a high yield rate.
   Here, the thermal expansion coefficient refers to the rate of change in lattice constant of the solid electrolyte member depending on the temperature, measured by X-ray diffraction (XRD).
(4) In the solid electrolyte member according to any one of the above (1) to (3), preferably, the electrolyte layer has a laminate structure having two or more sublayers, and the difference in thermal expansion coefficient between the anode layer and one of the sublayers of the electrolyte layer that is in contact with the anode layer is not more than 2.5 × 10⁻⁶K⁻¹.
   The aspect of the invention according to the above (4) can provide a solid electrolyte member having a smaller difference in thermal expansion coefficient between the anode layer and the electrolyte layer that is in contact with the anode layer, thus having a high yield rate.
(5) In the solid electrolyte member according to any one of the above (1) to (4), preferably, the anode layer has a laminate structure having two or more sublayers, and the difference in thermal expansion coefficient between the electrolyte layer and one of the sublayers of the anode layer that is in contact with the electrolyte layer is not more than 2.5 × 10⁻⁶ K⁻¹.
   The aspect of the invention according to the above (5) can provide a solid electrolyte member having a smaller difference in thermal expansion coefficient between the electrolyte layer and the anode layer that is in contact with the electrolyte layer, thus having a high yield rate.
(6) In the solid electrolyte member according to any one of the above (1) to (5), the electrolyte layer preferably has a thickness of not less than 5 µm and not more than 100 µm.
   The aspect of the invention according to the above (7) can provide a solid electrolyte member including an electrolyte layer having high proton conductivity and high strength.
(7) In the solid electrolyte member according to any one of the above (1) to (6), preferably, the anode layer has a laminate structure having two or more sublayers, one of the sublayers of the anode layer that is not in contact with the electrolyte layer contains NiO and the metal oxide, and one of the sublayers of the anode layer that is in contact with the electrolyte layer contains Fe₂O₃ and the metal oxide.
   When the solid electrolyte member is used in, for example, a solid oxide fuel cell, nickel is typically used for its current collector. According to the aspect of the invention according to the above (7), the same material is contained in the anode sublayer remote from the electrolyte layer and in the current collector. This can decrease the contact resistance between the anode sublayer and the current collector and increase the bonding strength.
(8) The solid electrolyte member according to any one of the above (1) to (7) preferably further comprises a cathode layer laminated on a surface of the electrolyte layer opposite to the side where the anode layer is laminated.
   The aspect of the invention according to the above (8) can provide a solid electrolyte member for use in, for example, a solid oxide fuel cell, a water electrolysis device, and a hydrogen pump.
(9) A solid oxide fuel cell according to one aspect of the present invention is a solid oxide fuel cell comprising the solid electrolyte member according to the above (8).
   The aspect of the invention according to the above (9) can provide a large-size solid oxide fuel cell that can efficiently generate power.
(10) A water electrolysis device according to one aspect of the present invention is a water electrolysis device comprising the solid electrolyte member according to the above (8).
   The aspect of the invention according to the above (10) can provide a large-size water electrolysis device that can efficiently generate hydrogen and oxygen.
(11) A hydrogen pump according to one aspect of the present invention is a hydrogen pump comprising the solid electrolyte member according to the above (8).
   The aspect of the invention according to the above (11) can provide a large-size hydrogen pump that can move a large quantity of hydrogen ions.
(12) A method for manufacturing a solid electrolyte member according to one aspect of the present invention is a method for manufacturing the solid electrolyte member according to the above (1), the method comprising:
   molding an anode layer material and pre-sintering the molded anode layer material to form a pre-sintered layer;
   applying an electrolyte layer material to one face of the pre-sintered layer and drying the applied electrolyte layer material; and
   sintering the pre-sintered layer having the electrolyte layer material applied thereon, thereby forming a solid electrolyte member in which an anode layer and an electrolyte layer are laminated,
   the electrolyte layer material containing a metal oxide having a perovskite crystal structure,
   the anode layer material containing Fe₂O₃ and the metal oxide,
   the metal oxide being a metal oxide expressed by the following formula [1], or a mixture or a solid solution of a metal oxide expressed by the following formula [1]:

      AₐB_{b}M_{c}O_{3-δ} formula [1],

      where A denotes at least one element selected from the group consisting of barium (Ba) and calcium (Ca); B denotes at least one element selected from the group consisting of cerium (Ce) and zirconium (Zr); M denotes at least one element selected from the group consisting of yttrium (Y), ytterbium (Yb), erbium (Er), holmium (Ho), thulium (Tm), gadolinium (Gd), indium (In), and scandium (Sc); a is a number satisfying 0.85 ≤ a ≤ 1; b is a number satisfying 0.50 ≤ b < 1; c is a number satisfying c = 1 - b; and δ is an oxygen deficiency amount.

The aspect of the invention according to the above (12) can provide a method that can manufacture the solid electrolyte member according to the above (1).

### [Details of Embodiments of the Invention]

Concrete examples of a solid electrolyte member and other matters according to embodiments of the present invention will now be described in more detail.

The present invention is not limited to these examples but is defined by the terms of the claims. It is intended that the present invention includes any modification within the meaning and scope equivalent to the terms of the claims.

### <Solid Electrolyte Member>

The solid electrolyte member according to an embodiment of the present invention is a proton-conductive solid electrolyte member having a structure in which an electrolyte layer is laminated on one face of an anode layer. The anode layer contains Fe₂O₃ and a metal oxide expressed by the above formula [1]. In a conventional solid electrolyte member in which NiO is contained in an anode layer, Ni reacts with Ba and Ca at the time of sintering, thus resulting in impurities (e.g., BaNiOₓ) arising therein. By contrast, in the solid electrolyte member according to an embodiment of the present invention, Fe₂O₃ is contained in an anode layer to serve as a catalyst. Since Fe has low reactivity with Ba and Ca, very little or no impurities are produced by their reactions.

The electrolyte layer may be a single layer or may be a laminate of a plurality of electrolyte sublayers having different compositions. Similarly, the anode layer may be a single layer or may be a laminate of a plurality of anode sublayers having different compositions. By way of example, an anode sublayer that is not in contact with the electrolyte layer may contain NiO in addition to a metal oxide expressed by the above formula [1]. If the solid electrolyte member includes a cathode layer, the cathode layer may be laminated on the surface of the electrolyte layer opposite to the side where the anode layer is laminated.

In the solid electrolyte member according to an embodiment of the present invention, the difference in thermal expansion coefficient between the anode layer and the electrolyte layer that is in contact with the anode layer is preferably not more than 2.5 × 10⁻⁶ K⁻¹.

In general, a solid electrolyte member in which an anode layer and an electrolyte layer are laminated is manufactured by applying an electrolyte layer to a pre-sintered anode layer, drying the electrolyte layer, and then co-sintering the layers. Minimizing the difference in thermal expansion coefficient between the electrolyte layer and the anode layer can minimize the deformation of the solid electrolyte member at the time of co-sintering, and minimize the occurrence of peeling off and cracks at the interface between the electrolyte layer and the anode layer. If the electrolyte layer is a laminate of a plurality of electrolyte sublayers, the difference in thermal expansion coefficient between adjacent electrolyte sublayers is preferably not more than 2.5 × 10⁻⁶K⁻¹. Similarly, if the anode layer is a laminate of a plurality of anode sublayers, the difference in thermal expansion coefficient between adjacent anode sublayers is preferably not more than 2.5 × 10⁻⁶ K⁻¹.

The solid electrolyte member is not limited to a particular size. The solid electrolyte member may have any desired shape with a large size, such as a circle with about 100 mm diameter or a square with about 100 mm side. If a conventional solid electrolyte member, having a laminate of anode and electrolyte layers, has a shape of a circle with about 40 mm or longer diameter or a square with about 40 mm or longer side, the solid electrolyte member presents a poor yield rate because of deformations and fine cracks arising during manufacture. By contrast, the solid electrolyte member according to an embodiment of the present invention can achieve a high yield rate even if it has a large size as described above.

### (Electrolyte Layer)

The electrolyte layer contains a metal oxide having a perovskite crystal structure.

The metal oxide having a perovskite crystal structure may be any of a metal oxide expressed by the following formula [1], and a mixture or solid solution of a metal oxide expressed by the following formula [1].

AₐB_{b}M_{c}O_{3-δ} formula [1]

In the above formula [1], A denotes at least one element selected from the group consisting of barium (Ba) and calcium (Ca).

In the above formula [1], B denotes at least one element selected from the group consisting of cerium (Ce) and zirconium (Zr).

In the above formula [1], M denotes at least one element selected from the group consisting of yttrium (Y), ytterbium (Yb), erbium (Er), holmium (Ho), thulium (Tm), gadolinium (Gd), indium (In), and scandium (Sc). In particular, when M is yttrium (Y), the solid electrolyte member exhibits higher proton conductivity.

In the above formula [1], a may be any number satisfying 0.85 ≤ a ≤ 1, more preferably a number satisfying 0.88 ≤ a ≤ 0.98, still more preferably a number satisfying 0.90 ≤ a ≤ 0.97. When a is not less than 0.85, high proton conductivity is exhibited. When a is not more than 1, the chemical stability is enhanced.

In the above formula [1], b may be any number satisfying 0.50 ≤ b < 1, more preferably a number satisfying 0.70 ≤ b ≤ 0.95, still more preferably a number satisfying 0.75 ≤ b ≤ 0.90. When b is not less than 0.50, the precipitation of a phase that inhibits proton conduction is minimized. When b is less than 1, the solid electrolyte member exhibits higher conductivity.

In the above formula [1], c is a number satisfying c = 1 - b.

In the above formula [1], δ is an oxygen deficiency amount which depends on the numerical values of a and b, and the atmosphere.

Among the compounds expressed by the above formula [1], the metal oxide is more preferably Ba_{d}ZrₑCe_{f}Y_{1-e-f}O_{3-δ2}, where d is a number satisfying 0.85 ≤ d ≤ 1, e is a number satisfying 0 ≤ e ≤ 1, f is a number satisfying 0 ≤ f ≤ 1, δ2 is an oxygen deficiency amount, and in no case e and f are both 0 at the same time.

The electrolyte layer may have any thickness, e.g., about not less than 5 µm and not more than 100 µm. The electrolyte layer having a thickness of not less than 5 µm achieves high strength and prevents a gas leak. The electrolyte layer having a thickness of not more than 100 µm achieves low resistance. From these viewpoints, the thickness of electrolyte layer is more preferably not less than 5 µm and not more than 50 µm, still more preferably not less than 10 µm and not more than 30 µm.

### (Anode Layer)

The anode layer may be any layer that contains Fe₂O₃ and a metal oxide having a perovskite crystal structure. The metal oxide having a perovskite crystal structure may be a metal oxide expressed by the above formula [1], which has been described for the electrolyte layer.

The ratio between Fe₂O₃ and a metal oxide expressed by the above formula [1] in the anode layer may be any ratio. For example, the anode layer containing not less than 30% by mass of Fe₂O₃ exhibits high conductivity. The anode layer containing not more than 70% by mass of Fe₂O₃ exhibits high strength. From these viewpoints, the content of Fe₂O₃ in the anode layer is more preferably not less than 30% by mass and not more than 60% by mass, still more preferably not less than 40% by mass and not more than 50% by mass.

The anode layer may have any thickness, e.g., about not less than 200 µm and not more than 1000 µm. The anode layer having a thickness of not less than 200 µm achieves high strength. The anode layer having a thickness of not more than 1000 µm achieves low resistance. From these viewpoints, the thickness of the anode layer is more preferably not less than 250 µm and not more than 800 µm, still more preferably not less than 260 µm and not more than 700 µm.

### (Thermal Expansion Coefficient)

The difference in thermal expansion coefficient between the anode layer and the electrolyte layer that is in contact with the anode layer is preferably not more than 2.5 × 10⁻⁶ K⁻¹, more preferably not more than 1.0 × 10⁻⁶ K⁻¹, still more preferably not more than 0.7 × 10⁻⁶ K⁻¹. A smaller difference in thermal expansion coefficient between the electrolyte layer and the anode layer can more reliably decrease the occurrence of deformation of the solid electrolyte member when it is manufactured, and decrease the occurrence of peeling off and cracks at the interface between the electrolyte layer and the anode layer.

### (Cathode Layer)

If the solid electrolyte member according to an embodiment of the present invention includes a cathode layer, the cathode layer may be laminated on the surface of the electrolyte layer opposite to the side where the anode layer is laminated.

The cathode layer preferably contains at least one selected from the group consisting of the metal oxides expressed by the following formulae [A] to [D].

(La₁₋ₓ, Srₓ)(Co_{1-y}, Mn_{y})O₃ formula [A]

(La₁₋ₓ, Srₓ)(Co_{1-y}, Fe_{y})O₃ formula [B]

(Ba₁₋ₓ, Laₓ)(Co_{1-y}, Fe_{y})O₃ formula [C]

(Ba₁₋ₓ, Srₓ)(Co_{1-y}, Mn_{y})O₃ formula [D]

In formulae [A] to [D], x is a number satisfying 0 ≤ x ≤ 1, and y is a number satisfying 0 ≤ y ≤ 1.

The cathode layer may have any construction that allows a triphase interface to be formed and has a path of gas.

The cathode layer may have any thickness, e.g., about not less than 0.01 µm and not more than 100 µm. From the viewpoint of improving the current collecting properties, the thickness of the cathode layer is more preferably not less than 0.05 µm and not more than 50 µm, still more preferably not less than 0.1 µm and not more than 20 µm.

The solid electrolyte member according to each embodiment of the present invention will now be described in detail.

### -First Embodiment-

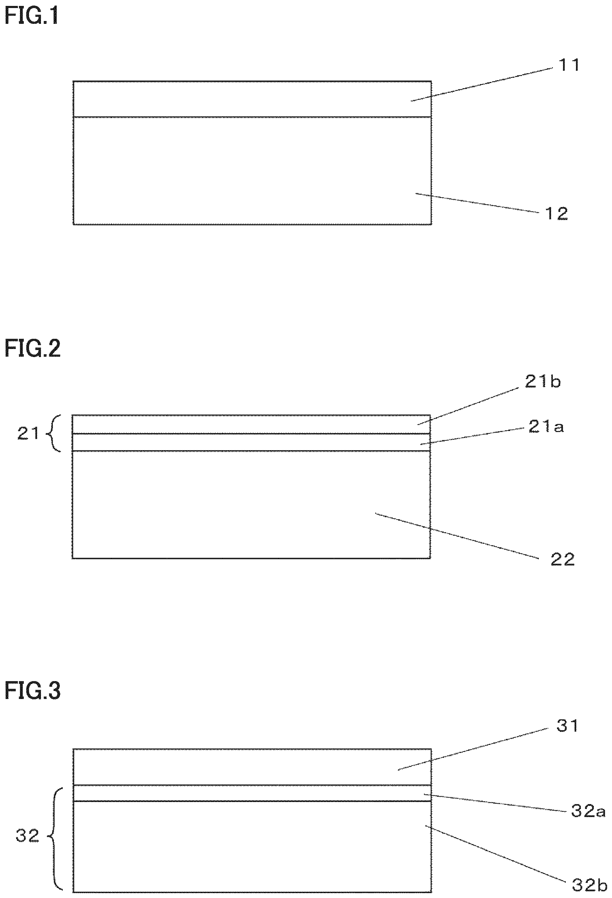

Fig. 1 is a schematic diagram showing an example construction of a solid electrolyte member according to the first embodiment of the present invention.

As shown in Fig. 1, the solid electrolyte member according to the first embodiment of the present invention has a structure in which electrolyte layer 11 is laminated on one face of anode layer 12. The difference in thermal expansion coefficient between anode layer 12 and electrolyte layer 11 that is in contact with anode layer 12 is preferably not more than 2.5 × 10⁻⁶ K⁻¹.

By appropriately selecting the compositions of electrolyte layer 11 and anode layer 12, the difference in thermal expansion coefficient between electrolyte layer 11 and anode layer 12 can be decreased.

For example, if electrolyte layer 11 is composed of BaZr_{0.8}Y₀O_{2.9} (BZY), the thermal expansion coefficient of electrolyte layer 11 is 8.7 × 10⁻⁶K⁻¹. In this case, the mass ratio between BaZr_{0.8}Y₀O_{2.9} (BZY) and Fe₂O₃ in anode layer 12 may be adjusted to 5:5, for example. Accordingly, anode layer 12 has a thermal expansion coefficient of 10.6 × 10⁻⁶ K⁻¹, and the difference in thermal expansion coefficient between electrolyte layer 11 and anode layer 12 is not more than 2.5 × 10⁻⁶ K⁻¹.

If electrolyte layer 11 is composed of BaZr_{0.4}Ce_{0.4}Y₀.₂O_{2.9} (BZCY44), the thermal expansion coefficient of electrolyte layer 11 is 10.0 × 10⁻⁶ K⁻¹. In this case, the mass ratio between BaZr_{0.4}Ce_{0.4}Y_{0.2}O_{2.9} (BZCY44) and Fe₂O₃ in anode layer 12 may be adjusted to 3:7, for example. Accordingly, anode layer 12 has a thermal expansion coefficient of 11.4 × 10⁻⁶ K⁻¹, and the difference in thermal expansion coefficient between electrolyte layer 11 and anode layer 12 is not more than 2.5 × 10⁻⁶K⁻¹.

### -Second Embodiment-

Fig. 2 is a schematic diagram showing an example construction of a solid electrolyte member according to the second embodiment of the present invention.

As shown in Fig. 2, the solid electrolyte member according to the second embodiment of the present invention has a structure in which an electrolyte layer 21 is laminated on one face of an anode layer 22. Electrolyte layer 21 has a structure in which a first electrolyte layer 21a and a second electrolyte layer 21b are laminated. The difference in thermal expansion coefficient between anode layer 22 and first electrolyte layer 21a that is in contact with anode layer 22 is preferably not more than 2.5 × 10⁻⁶ K⁻¹. The difference in thermal expansion coefficient between first electrolyte layer 21a and second electrolyte layer 21b is also preferably not more than 2.5 × 10⁻⁶ K⁻¹.

For example, if second electrolyte layer 21b is composed of BaZr_{0.8}Y₀O_{2.9} (BZY), the thermal expansion coefficient of second electrolyte layer 21b is 8.7 × 10⁻⁶K⁻¹. If first electrolyte layer 21a is composed of BaCe_{0.8}Y_{0.2}O_{2.9} (BCY), the thermal expansion coefficient of first electrolyte layer 21a is 11.2 × 10⁻⁶ K⁻¹. In this case, the mass ratio between BaZr_{0.8}Y₀O_{2.9} (BZY) and Fe₂O₃ in anode layer 22 may be adjusted to 3:7, for example. Accordingly, anode layer 22 has a thermal expansion coefficient of 11.4 × 10⁻⁶K⁻¹, and the difference in thermal expansion coefficient between first electrolyte layer 21a and anode layer 22 is not more than 2.5 × 10⁻⁶K⁻¹.

The difference in thermal expansion coefficient between first electrolyte layer 21a and second electrolyte layer 21b is also not more than 2.5 × 10⁻⁶K⁻¹.

### -Third Embodiment-

Fig. 3 is a schematic diagram showing an example construction of a solid electrolyte member according to the third embodiment of the present invention.

As shown in Fig. 3, the solid electrolyte member according to the third embodiment of the present invention has a structure in which an electrolyte layer 31 is laminated on one face of an anode layer 32. Anode layer 32 has a structure in which a first anode layer 32a and a second anode layer 32b are laminated. The difference in thermal expansion coefficient between first anode layer 32a and electrolyte layer 31 that is in contact with first anode layer 32a is preferably not more than 2.5 × 10⁻⁶K⁻¹. The difference in thermal expansion coefficient between first anode layer 32a and second anode layer 32b is also preferably not more than 2.5 × 10⁻⁶K⁻¹.

For example, if electrolyte layer 31 is composed of BaZr_{0.8}Y₀O_{2.9} (BZY), the thermal expansion coefficient of electrolyte layer 31 is 8.7 × 10⁻⁶K⁻¹. In this case, the mass ratio between BaZr_{0.8}Y₀O_{2.9} (BZY) and Fe₂O₃ in first anode layer 32a may be adjusted to 7:3, for example. Accordingly, first anode layer 32a has a thermal expansion coefficient of 9.8 × 10⁻⁶ K⁻¹, and the difference in thermal expansion coefficient between electrolyte layer 31 and first anode layer 32a is not more than 2.5 × 10⁻⁶ K⁻¹.

The mass ratio between BaZr_{0.8}Y_{0.2}O_{2.9} (BZY) and Fe₂O₃ in second anode layer 32b may be adjusted to 3:7, for example. Accordingly, second anode layer 32b has a thermal expansion coefficient of 11.4 × 10⁻⁶ K⁻¹, and the difference in thermal expansion coefficient between first anode layer 32a and second anode layer 32b is not more than 2.5 × 10⁻⁶ K⁻¹.

Second anode layer 32b, which is not in contact with electrolyte layer 31, may contain NiO in addition to a metal oxide expressed by the above formula [1]. If NiO is contained in second anode layer 32b, the ratio between NiO and a metal oxide expressed by the above formula [1] may be any ratio. For example, from the viewpoint of ensuring high strength, the mass ratio between NiO and the metal oxide is preferably about 5:5 to 8:2. From the viewpoint of relaxing the thermal strain with first anode layer 32a, the mass ratio is preferably about 2:8 to 5:5. From the viewpoint of decreasing the reactivity between NiO and the metal oxide, the mass ratio is preferably 5:5. All things considered, the mass ratio between NiO and the metal oxide in second anode layer 32b is more preferably about 6:4 to 7:3.

### -Fourth Embodiment-

Fig. 4 is a schematic diagram showing an example construction of a solid electrolyte member according to the fourth embodiment of the present invention.

As shown in Fig. 4, the solid electrolyte member according to the fourth embodiment of the present invention has a structure in which an electrolyte layer 41 is laminated on one face of anode layer 42. Electrolyte layer 41 has a structure in which a first electrolyte layer 41a and a second electrolyte layer 41b are laminated. Anode layer 42 has a structure in which a first anode layer 42a and a second anode layer 42b are laminated.

The difference in thermal expansion coefficient between first anode layer 42a and first electrolyte layer 41a that is in contact with first anode layer 42a is preferably not more than 2.5 × 10⁻⁶K⁻¹. The difference in thermal expansion coefficient between first electrolyte layer 41a and second electrolyte layer 41b is also preferably not more than 2.5 × 10⁻⁶K⁻¹, and the difference in thermal expansion coefficient between first anode layer 42a and second anode layer 42b is also preferably not more than 2.5 × 10⁻⁶K⁻¹.

For example, if second electrolyte layer 41b is composed of BaZr_{0.8}Y_{0.2}O_{2.9} (BZY), the thermal expansion coefficient of second electrolyte layer 41b is 8.7 × 10⁻⁶K⁻¹. If first electrolyte layer 41a is composed of BaZr_{0.4}Ce_{0.4}Y_{0.2}O_{2.9} (BZCY44), the thermal expansion coefficient of first electrolyte layer 41a is 10.0 × 10⁻⁶ K⁻¹.

In this case, the mass ratio between BaZr_{0.8}Y_{0.2}O_{2.9} (BZY) and Fe₂O₃ in first anode layer 42a may be adjusted to 7:3, for example. Accordingly, first anode layer 42a has a thermal expansion coefficient of 9.8 × 10⁻⁶K⁻¹, and the difference in thermal expansion coefficient between electrolyte layer 41a and first anode layer 42a is not more than 2.5 × 10⁻⁶ K⁻¹.

The mass ratio between BaZr_{0.8}Y_{0.2}O_{2.9} (BZY) and Fe₂O₃ in second anode layer 42b may be adjusted to 3:7, for example. Accordingly, second anode layer 42b has a thermal expansion coefficient of 11.4 × 10⁻⁶ K⁻¹, and the difference in thermal expansion coefficient between first anode layer 42a and second anode layer 42b is not more than 2.5 × 10⁻⁶ K⁻¹.

As in the solid electrolyte member according to the third embodiment described above, second anode layer 42b, which is not in contact with electrolyte layer 41, may contain NiO in addition to a metal oxide expressed by the above formula [1].

### -Fifth Embodiment-

Fig. 5 is a schematic diagram showing an example construction of a solid electrolyte member according to the fifth embodiment of the present invention.

As shown in Fig. 5, the solid electrolyte member according to the fifth embodiment of the present invention has a structure in which an electrolyte layer 51 is laminated on one face of an anode layer 52. Further, a cathode layer 53 is laminated on the surface of electrolyte layer 51 opposite to the side where anode layer 52 is laminated. The difference in thermal expansion coefficient between electrolyte layer 51 and anode layer 52 is preferably not more than 2.5 × 10⁻⁶ K⁻¹.

### <Solid Oxide Fuel Cell>

A solid oxide fuel cell according to one embodiment of the present invention includes the solid electrolyte member according to one of the above-described embodiments of the present invention. In other respects, the solid oxide fuel cell may have the same construction as a conventional solid oxide fuel cell. As described above, the solid electrolyte member according to an embodiment of the present invention can be larger in size than a conventional solid electrolyte member. Using the large-size solid electrolyte member according to an embodiment of the present invention, provided is a solid oxide fuel cell that can efficiently generate power.

### <Water Electrolysis Device>

A water electrolysis device according to one embodiment of the present invention includes the solid electrolyte member according to one of the above-described embodiments of the present invention. In other respects, the water electrolysis device may have the same construction as a conventional one that applies a voltage to water for electrolysis into hydrogen and oxygen. Using the large-size solid electrolyte member according to an embodiment of the present invention, provided is a water electrolysis device that can efficiently generate hydrogen and oxygen.

### <Hydrogen Pump>

A hydrogen pump according to one embodiment of the present invention includes the solid electrolyte member according to one of the above-described embodiments of the present invention. In other respects, the hydrogen pump may have the same construction as a conventional one that applies a voltage to a solid electrolyte to move hydrogen ions from one side to the other. Using the large-size solid electrolyte member according to an embodiment of the present invention, provided is a hydrogen pump that can move a large quantity of hydrogen ions.

### <Method for Manufacturing Solid Electrolyte Member>

A method for manufacturing a solid electrolyte member according to one embodiment of the present invention includes a step of forming an anode layer, a step of applying an electrolyte layer, a step of sintering, and optionally a step of forming a cathode layer.

Each step will now be described in detail.

### (Step of Forming Anode Layer)

The step of forming an anode layer is defined as a step of mixing anode layer material, molding it, and then pre-sintering it.

The anode layer material may be any material that contains Fe₂O₃ and a metal oxide having a perovskite crystal structure. The metal oxide having a perovskite crystal structure may be a metal oxide expressed by formula [1] as described above for the solid electrolyte member according to an embodiment of the present invention. The content of Fe₂O₃ in the anode layer material is preferably not less than 30% by mass from the viewpoint of ensuring high conductivity of the anode layer, and is preferably not more than 70% by mass from the viewpoint of ensuring high strength of the anode layer. From these viewpoints, the content of Fe₂O₃ in the anode layer material is more preferably not less than 30% by mass and not more than 60% by mass, still more preferably not less than 40% by mass and not more than 50% by mass.

Any method may be used to mold the anode layer material, such as uniaxial molding and sheet molding. Any desired shape may be produced, such as a circle with about 100 mm diameter or a square with about 100 mm side.

From the viewpoint of facilitating reduction of Fe₂O₃ and decreasing the resistance while ensuring high strength, the anode layer material is preferably molded into a thickness of about not less than 200 µm and not more than 1000 µm, more preferably not less than 250 µm and not more than 800 µm, still more preferably not less than 260 µm and not more than 700 µm.

The pre-sintering temperature may be about not less than 800°C and not more than 1400°C, more preferably about not less than 900°C and not more than 1300°C, still more preferably about not less than 1000°C and not more than 1200°C.

The pre-sintering atmosphere may be, for example, air or oxygen.

In the case in which the anode layer is a laminate of a plurality of anode sublayers, an anode sublayer (pre-sintered layer) is formed as described above, following which an anode layer material having another composition is applied to one face of the anode sublayer, and then the applied material is dried. Any method may be used to apply the anode layer material, such as screen printing and sputtering.

The anode layer material may be molded and/or applied to a pre-sintered layer so that the final anode layer has a thickness of about not less than 200 µm and not more than 1000 µm, more preferably about not less than 250 µm and not more than 800 µm, still more preferably about not less than 260 µm and not more than 700 µm.

### (Step of Applying Electrolyte Layer)

The step of applying an electrolyte layer is defined as a step of applying an electrolyte layer material to one face of the anode layer (pre-sintered layer) and drying it. If the anode layer is a laminate of a plurality of anode sublayers, the electrolyte layer material is applied preferably to the anode sublayer whose thermal expansion coefficient is closer to the thermal expansion coefficient of the electrolyte layer.

The electrolyte layer material may be any material that contains a metal oxide having a perovskite crystal structure. The metal oxide having a perovskite crystal structure may be a metal oxide expressed by formula [1] as described above for the solid electrolyte member according to an embodiment of the present invention.

Any method may be used to apply the electrolyte layer material, such as screen printing and sheet molding.

In the case in which the electrolyte layer is a laminate of a plurality of electrolyte sublayers, an electrolyte layer material is applied and dried as described above, following which an electrolyte layer material having another composition is further applied and dried.

The electrolyte layer material may be applied so that the final electrolyte layer has a thickness of about not less than 5 µm and not more than 100 µm, more preferably about not less than 5 µm and not more than 50 µm, still more preferably about not less than 10 µm and not more than 30 µm.

### (Step of Sintering)

The step of sintering is defined as a step of sintering a laminate, which has been obtained by applying the electrolyte layer on the surface of the anode layer (pre-sintered layer), thereby forming a solid electrolyte member in which the anode layer and the electrolyte layer are laminated.

In a conventional method for manufacturing a solid electrolyte member, Ba and/or Ca and Ni contained in the anode layer react with each other during the step of sintering, resulting in generation of liquid-phase BaNiOₓ. By contrast, in the method for manufacturing a solid electrolyte member according to an embodiment of the present invention, Ba and/or Ca and Fe contained in the anode layer show low reactivity. This results in very little or no generation of impurities, and achieves surface smoothness of the electrolyte layer.

In the method for manufacturing a solid electrolyte member according to an embodiment of the present invention, the difference in thermal expansion coefficient between the anode layer and the electrolyte layer that is in contact with the anode layer is preferably not more than 2.5 × 10⁻⁶K⁻¹. This can decrease the thermal strain between the anode layer and the electrolyte layer, thus allowing a large-size solid electrolyte member to be manufactured without the occurrence of deformations, breakages, or cracks at the time of sintering.

The sintering temperature may be about not less than 1400°C and not more than 1600°C, more preferably about not less than 1400°C and not more than 1500°C, still more preferably about not less than 1400°C and not more than 1450°C.

The sintering atmosphere may be, for example, air or oxygen.

### (Step of Forming Cathode Layer)

If the solid electrolyte member produced as described above is to include a cathode layer, a cathode layer material may be applied to the surface of the electrolyte layer opposite to the side where the anode layer is formed. The applied material may then be sintered.

The cathode layer material may be any material that contains a metal oxide to be contained in the cathode layer as described above for the solid electrolyte member according to an embodiment of the present invention (at least one selected from the group consisting of the metal oxides expressed by the above formulae [A] to [D]).

Any method may be used to apply the cathode layer material, such as screen printing and sputtering.

From the viewpoint of improving the current collecting properties, the cathode layer material may be applied so that the final cathode layer has a thickness of about not less than 0.01 µm and not more than 100 µm, more preferably about not less than 0.05 µm and not more than 50 µm, still more preferably about not less than 0.1 µm and not more than 20 µm.

The sintering temperature may be about not less than 800°C and not more than 1300°C, more preferably about not less than 900°C and not more than 1200°C, still more preferably about not less than 1000°C and not more than 1100°C.

The sintering atmosphere may be, for example, air or oxygen.

### Examples

The present invention will now be described in more detail based on examples. However, the examples are merely illustrative, and the solid electrolyte member and other matters of the present invention are not limited to these examples. The scope of the present invention is defined by the terms of the claims and includes any modification within the meaning and scope equivalent to the terms of the claims.

### [Example 1]

### (Step of Forming Anode Layer)

The anode layer material was Fe₂O₃ powder and BaZr_{0.8}Y_{0.2}O_{2.9} (BZY) powder, i.e., a metal oxide having a perovskite crystal structure. The content of Fe₂O₃ powder in the anode layer material was 50% by mass. The anode layer material was mixed with isopropanol as a solvent in a ball mill and was then dried. The dried anode layer material was uniaxial-molded into a circle with 100 mm diameter and 700 µm thickness. The molded article was pre-sintered at 1000°C under the air atmosphere to produce an anode layer (pre-sintered layer).

### (Step of Applying Electrolyte Layer)

The electrolyte layer material was BaZr_{0.8}Y₀O_{2.9} (BZY) powder, i.e., a metal oxide having a perovskite crystal structure. The electrolyte layer material was mixed with ethyl cellulose (having an ethoxylation degree of about 49%) as a binder and α-terpineol as a solvent, the mixture being in the form of a paste. This paste of electrolyte layer material was applied to one face of the anode layer (pre-sintered layer) by screen printing. Then, it was heated to 800°C so that the binder and the solvent were removed. The electrolyte layer material applied to the surface of the anode layer (pre-sintered layer) had a thickness of 20 µm.

### (Step of Sintering)

The anode layer (pre-sintered layer) having the electrolyte layer material applied thereon was sintered at 1400°C under the oxygen atmosphere.

By performing the steps as described above, solid electrolyte members No. 1 were produced, each having a structure in which the electrolyte layer was laminated on one face of the anode layer.

### [Comparative Example 1]

Solid electrolyte members No. A were produced, each having a structure in which an electrolyte layer was laminated on one face of an anode layer, in the same manner as example 1 except that Fe₂O₃ powder of example 1 was replaced by NiO powder.

### <Evaluation>

### (Yield Rate)

Thirty solid electrolyte members No. 1 of example 1 and thirty solid electrolyte members No. A of comparative example 1 were produced and checked for the occurrence of breakages and cracks.

As a result, two of solid electrolyte members No. 1 of example 1 had breakages and eleven of them had cracks, with the yield rate being 57%. On the other hand, five of solid electrolyte members No. A of comparative example 1 had breakages and fifteen of them had cracks, with the yield rate being 33%.

The results are shown in table 1.

### (Degree of Deformation)

The degree of deformation (warpage) was examined for solid electrolyte members No. 1 of example 1 and solid electrolyte members No. A of comparative example 1 that had no breakages or cracks at the manufacturing stage. The warpage of each solid electrolyte member was evaluated by measuring the difference between the height of the lowest part and the height of the highest part of the solid electrolyte member placed still on a flat plate.

As a result, for solid electrolyte members No. 1 of example 1, the warpage ranged from 0.7 to 0.8 mm. By contrast, for solid electrolyte members No. A of comparative example 1, the warpage ranged from 1.0 to 1.1 mm.

When solid electrolyte members having a warpage of not more than 1.0 mm were determined as acceptable, good solid electrolyte members, all of seventeen solid electrolyte members No. 1 of example 1 were acceptable, whereas seven of solid electrolyte members No. A of comparative example 1 were acceptable.

The results are shown in table 1.

**[Table 1]**

| Solid Electrolyte Member No. | Yield Rate (%) | Warpage (mm) |
|---|---|---|
| 1 | 56 | 0.7 to 0.8 |
| A | 32 | 1.0 to 1.1 |

### (Thermal Expansion Coefficient)

Using an X-ray diffractometer (RAD-RX) available from Rigaku Corporation, each layer of solid electrolyte members No. 1 and solid electrolyte members No. A was heated at 150°C /min and kept at a prescribed temperature for 30 minutes, and then its thermal expansion coefficient was measured.

As a result, in solid electrolyte member No. 1, the anode layer had a thermal expansion coefficient of 10.6 × 10⁻⁶K⁻¹, and the electrolyte layer had a thermal expansion coefficient of 8.7 × 10⁻⁶K⁻¹. The high yield rate and the small degree of deformation are conceivably because of the difference in thermal expansion coefficient between the anode layer and the electrolyte layer being not more than 2.5 × 10⁻⁶K⁻¹.

On the other hand, in solid electrolyte member No. A, the anode layer had a thermal expansion coefficient of 12.3 × 10⁻⁶ K⁻¹, and the electrolyte layer had a thermal expansion coefficient of 8.7 × 10⁻⁶ K⁻¹. The low yield rate and the large degree of deformation are conceivably because of the difference in thermal expansion coefficient between the anode layer and the electrolyte layer being not less than 2.5 × 10⁻⁶ K⁻¹.

### [Example 2]

Solid electrolyte members No. 2 were produced as follows by forming a cathode layer on the electrolyte layer surface of each of three solid electrolyte members No. 1 of example 1 that were evaluated as acceptable.

### (Formation of Cathode Layer)

The cathode layer material was LSCF6428 (La_{0.6}Sr_{0.4}Co_{0.2}Fe_{0.8}O_{3-δ}, δ denoting the oxygen deficiency amount) powder, i.e., a metal oxide having a perovskite crystal structure (a metal oxide expressed by the above formula [B]).

The cathode layer material was applied to the electrolyte layer surface of each solid electrolyte member No. 1 by screen printing. The cathode layer material was formed into a thickness of 20 µm.

The laminate having the applied cathode layer material was sintered at 1000°C under the air atmosphere.

Thus, solid electrolyte members No. 2 were produced, each having a structure in which the electrolyte layer was interposed between the anode layer and the cathode layer.

### [Comparative Example 2]

Solid electrolyte members No. B were produced, each having a structure in which an electrolyte layer was interposed between an anode layer and a cathode layer, in the same manner as example 2 except that solid electrolyte members No. 1 used in example 2 were replaced by three solid electrolyte members No. A that were evaluated as acceptable.

### <Evaluation>

### (Evaluation of Power Generation)

The power generation was evaluated for solid electrolyte members No. 2 of example 2 and solid electrolyte members No. B of comparative example 2. The average of the open circuit voltages (OCVs) of three solid electrolyte members No. 2 was 1.052 V. By contrast, the average of the OCVs of three solid electrolyte members No. B was 1.030 V. The results are shown in table 2.

In solid electrolyte members No. 2, Ba and Fe contained in the anode layer are not reactive with each other and thus produce no impurities or reaction products. Accordingly, the anode layer is free from defects due to peeling off between the electrolyte layer and the cathode layer or due to a short circuit between the anode layer and the cathode layer. This is a conceivable reason why solid electrolyte members No. 2 were higher in OCV than solid electrolyte members No. B.

The power generation was evaluated under the conditions: the sample temperature was 600°C, the anode was supplied with 100% hydrogen gas at 0.3 L/min, and the cathode was supplied with air at 0.9 L/min.

**[Table 2]**

| Solid Electrolyte Member No. | Open Circuit Voltage (V) |
|---|---|
| 2 | 1.052 |
| B | 1.030 |

After the evaluation of power generation, each solid electrolyte member was pulled apart for examining the presence or absence of peeling off of the cathode due to the decomposition of BaNiOx. The examination revealed that solid electrolyte members No. B had peeling off at a part of the interface between the electrolyte and the cathode.

### REFERENCE SIGNS LIST

- 11: electrolyte layer
- 12: anode layer
- 21: electrolyte layer
- 21a: first electrolyte layer
- 21b: second electrolyte layer
- 22: anode layer
- 31: electrolyte layer
- 32: anode layer
- 32a: first anode layer
- 32b: second anode layer
- 41: electrolyte layer
- 41a: first electrolyte layer
- 41b: second electrolyte layer
- 42: anode layer
- 42a: first anode layer
- 42b: second anode layer
- 51: electrolyte layer
- 52: anode layer
- 53: cathode layer
- 61: electrolyte layer
- 62: anode layer
- 63: cathode layer
- 64: BaNiOₓ

## Claims

1. A proton-conductive solid electrolyte member having a structure in which an electrolyte layer and an anode layer are laminated,
the electrolyte layer containing a metal oxide having a perovskite crystal structure,
the anode layer containing Fe₂O₃ and the metal oxide,
the metal oxide being a metal oxide expressed by the following formula [1], or a mixture or a solid solution of a metal oxide expressed by the following formula [1]:
AₐB_{b}M_{c}O_{3-δ} formula [1],
where A denotes at least one element selected from the group consisting of barium (Ba) and calcium (Ca); B denotes at least one element selected from the group consisting of cerium (Ce) and zirconium (Zr); M denotes at least one element selected from the group consisting of yttrium (Y), ytterbium (Yb), erbium (Er), holmium (Ho), thulium (Tm), gadolinium (Gd), indium (In), and scandium (Sc); a is a number satisfying 0.85 ≤ a ≤ 1; b is a number satisfying 0.50 ≤ b < 1; c is a number satisfying c = 1 - b; and δ is an oxygen deficiency amount.

2. The solid electrolyte member according to claim 1, wherein a content of the Fe₂O₃ in the anode layer is not less than 30% by mass and not more than 70% by mass.

3. The solid electrolyte member according to claim 1 or 2, wherein a difference in thermal expansion coefficient between the electrolyte layer and the anode layer is not more than 2.5 × 10⁻⁶K⁻¹.

4. The solid electrolyte member according to any one of claims 1 to 3, wherein
the electrolyte layer has a laminate structure having two or more sublayers, and a difference in thermal expansion coefficient between the anode layer and one of the sublayers of the electrolyte layer that is in contact with the anode layer is not more than 2.5 × 10⁻⁶ K⁻¹.

5. The solid electrolyte member according to any one of claims 1 to 4, wherein
the anode layer has a laminate structure having two or more sublayers, and
a difference in thermal expansion coefficient between the electrolyte layer and one of the sublayers of the anode layer that is in contact with the electrolyte layer is not more than 2.5 × 10⁻⁶ K⁻¹.

6. The solid electrolyte member according to any one of claims 1 to 5, wherein the electrolyte layer has a thickness of not less than 5 µm and not more than 100 µm.

7. The solid electrolyte member according to any one of claims 1 to 6, wherein
the anode layer has a laminate structure having two or more sublayers,
one of the sublayers of the anode layer that is not in contact with the electrolyte layer contains NiO and the metal oxide, and
one of the sublayers of the anode layer that is in contact with the electrolyte layer contains Fe₂O₃ and the metal oxide.

8. The solid electrolyte member according to any one of claims 1 to 7, further comprising a cathode layer laminated on a surface of the electrolyte layer opposite to a side where the anode layer is laminated.

9. A solid oxide fuel cell comprising the solid electrolyte member according to claim 8.

10. A water electrolysis device comprising the solid electrolyte member according to claim 8.

11. A hydrogen pump comprising the solid electrolyte member according to claim 8.

12. A method for manufacturing a solid electrolyte member, the method comprising:
molding an anode layer material and pre-sintering the molded anode layer material to form a pre-sintered layer;
applying an electrolyte layer material to one face of the pre-sintered layer and drying the applied electrolyte layer material; and
sintering the pre-sintered layer having the electrolyte layer material applied thereon, thereby forming a solid electrolyte member in which an anode layer and an electrolyte layer are laminated,
the electrolyte layer material containing a metal oxide having a perovskite crystal structure,
the anode layer material containing Fe₂O₃ and the metal oxide,
the metal oxide being a metal oxide expressed by the following formula [1], or a mixture or a solid solution of a metal oxide expressed by the following formula [1]:
AₐB_{b}M_{c}O_{3-δ} formula [1],
where A denotes at least one element selected from the group consisting of barium (Ba) and calcium (Ca); B denotes at least one element selected from the group consisting of cerium (Ce) and zirconium (Zr); M denotes at least one element selected from the group consisting of yttrium (Y), ytterbium (Yb), erbium (Er), holmium (Ho), thulium (Tm), gadolinium (Gd), indium (In), and scandium (Sc); a is a number satisfying 0.85 ≤ a ≤ 1; b is a number satisfying 0.50 ≤ b < 1; c is a number satisfying c = 1 - b; and δ is an oxygen deficiency amount.
